# EUROPEAN PATENT APPLICATION

(11) **EP 2 036 929 A1**
(43) Date of publication of application: **18.03.2009**
(21) Application number: 07745171.4
(22) Date of filing: 13.06.2007
(51) Int. Cl.: C08F 212/06, C08F 2/48, C08F 220/02

(54) **HYPERBRANCHED POLYMER AND METHOD FOR PRODUCING THE SAME**

(30) Priority: 19.06.2006 JP 2006168721
(71) Applicant: TOKYO INSTITUTE OF TECHNOLOGY, Tokyo 1528550 (JP); Nissan Chemical Industries, Ltd., Chiyoda-ku, Tokyo 101-0054 (JP)
(72) Inventor: ISHIZU, Koji, Meguro-ku, Tokyo 152-8550 (JP); OZAWA, Masaaki, Funabashi-shi, Chiba 274-8507 (JP); TAKEMOTO, Hiroki, Kitakyushu-shi Fukuoka 806-0030 (JP)
(74) Representative: HOFFMANN EITLE
(86) International application number: PCT/JP2007/061904
(87) International publication number: WO 2007/148578

(57) **Abstract**

Disclosed is a novel hyperbranched polymer having a functional group in a molecular chain of a repeating unit. Also disclosed is a method for producing such a Hyperbranched polymer. Specifically disclosed is a hyperbranched polymer having a repeating unit derived from a (meth)acrylate compound as a linear structure, while having a repeating unit derived from a dithiocarbamate compound having a vinyl group structure as a branched structure. This hyperbranched polymer can be obtained by holding a dithiocarbamate compound having a vinyl group structure and a (meth)acrylate compound together and subjecting them to a living radical polymerization.

## Description

### TECHNICAL FIELD

The present invention relates to a novel hyperbranched polymer and a method for producing the same. In other words, the present invention relates to a hyperbranched polymer having in a molecular chain of a repeating unit, a hydroxyl group, an epoxy group or a carboxyl group. These hyperbranched polymers are preferably utilized, for example, as paints, inks, adhesives, resin fillers, various molding materials, nanometer pore forming agents, chemical and mechanical abrasives, supporting materials for functional substances, nanocapsules, photonic crystals, resist materials, optical materials, electronic materials, information recording materials, printing materials, battery materials, medical materials and magnetic materials.

### BACKGROUND ART

Hyperbranched polymers are classified as dendritic polymers together with dendrimers. While related-art polymers generally have a string form, these dendritic polymers have a highly branched structure which is a specific structure. Accordingly, these dendritic polymers have such various characteristics as having a nanometer size and surfaces capable of retaining many functional groups; being rendered having a low viscosity compared to linear polymers; exhibiting a behavior like fine particles with little entanglement between molecules; and capable of becoming amorphous with their solubility in a solvent controllable, so that their practical applications utilizing these characteristics are expected.
Particularly, it is the most remarkable characteristic of dentritic polymers to have a large number of terminal groups. The more the molecular weight is, the more the number of branched chains increases, so that the absolute number of terminal groups becomes larger as the molecular weight of dendritic polymers increases. In such a dendritic polymer having a large number of terminal groups, intermolecular interactions depend largely on the types of the terminal groups, resulting in variations in its glass transition temperature, solubility, thin film forming properties, or the like. Accordingly, such a dendritic polymer has characteristics which no general linear polymer has.
An advantage of the hyperbranched polymer over the dendrimer is in its simplicity for synthesis, which is advantageous particularly in an industrial production. Generally, while the dendrimer is synthesized by repeating protection and deprotection, the hyperbranched polymer is synthesized by a one-step polymerization of a so-called ABₓ type monomer having in one molecule thereof, a total of three or more substituents of two types.
Hitherto, it is known that a hyperbranched polymer can be synthesized by a living radical polymerization of a compound having a vinyl group while having a photo-polymerization initiating ability. For example, a synthesis method of a hyperbranched polymer by a photo-polymerization of a styrene compound having a dithiocarbamate group (see Non-Patent Documents 1, 2 and 3) and a synthesis method of a hyperbranched polymer having a dithiocarbamate group by a photo-polymerization of a (meth)acrylic compound having a dithiocarbamate group (see Non-Patent Documents 4, 5 and 6) are known. Since these hyperbranched polymers have no reactive functional group in a structure thereof, the development of multiphase applications thereof is limited. In addition, a method for synthesizing a hyperbranched polymer having a dithiocarbamate group at a molecular terminal thereof in which acid anhydrides are introduced in a main chain thereof by holding a styrene compound having a dithiocarbamate group and maleic anhydride together and by subjecting them to a photopolymerization (Non-Patent Document 7) is known. Since this hyperbranched polymer has acid anhydrides extremely unstable relative to a water content in the structure thereof, it has low stability relative to a water content. Therefore, a hyperbranched polymer having a reactive functional group and being stable also relative to a water content has been desired.
[Non-Patent Document 1]
   Koji Ishizu, Akihide Mori, Macromol. Rapid Commun. 21, 665-668 (2000)
[Non-Patent Document 2]
   Koji Ishizu, Akihide Mori, Polymer International 50, 906-910 (2001)
[Non-Patent Document 3]
   Koji Ishizu, Yoshihiro Ohta, Susumu Kawauchi, Macromolecules Vol. 35, No. 9, 3781-3784 (2002)
[Non-Patent Document 4]
   Koji Ishizu, Takeshi Shibuya, Akihide Mori, Polymer International 51, 424-428 (2002)
[Non-Patent Document 5]
   Koji Ishizu, Takeshi Shibuya, Susumu Kawauchi, Macromolecules Vol. 36, No. 10,3505-3510 (2002)
[Non-Patent Document 6]
   Koji Ishizu, Takeshi Shibuya, Jaebum Park, Satoshi Uchida, Polymer International 53, 259-265 (2004)
[Non-Patent Document 7]
   Koji Ishizu, Akihide Mori, Takeshi Shibuya, Polymer Vol 42, 7911-7914 (2001)

### DISCLOSURE OF THE INVENTION

### [Problems to be Solved by the Invention]

The present invention has been completed under the background of the technologies shown in the above-described documents. The present invention is to provide a novel hyperbranched polymer having a functional group in a molecular chain of a repeating unit and a method for producing the same and to aim at the development of multiphase applications.

### [Means for Solving the Problem]

As the result of making extensive and intensive studies toward solving the above-described problems, the present invention has reached the inventions according to the following aspects.
According to a first aspect of the present invention, a hyperbranched polymer having a structural formula represented by following Formula (1) as a polymerization initiation site, and having a repeating unit represented by following Formula (2) having a linear structure and a repeating unit represented by following Formula (3) having a branched structure in which the total number of the repeating units represented by Formula (2) having a linear structure is an integer of 1 to 100,000 and the total number of the repeating units represented by Formula (3) having a branched structure is an integer of 2 to 100,000 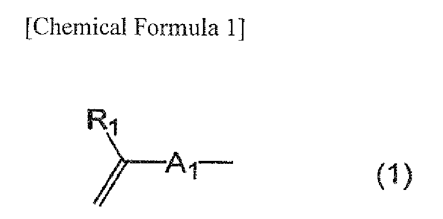 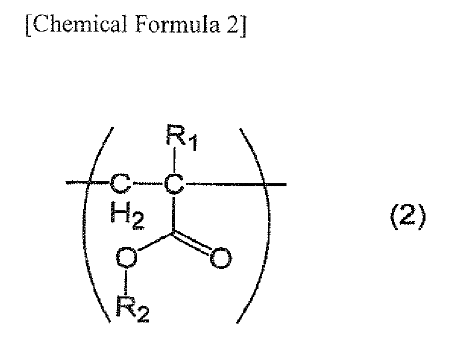 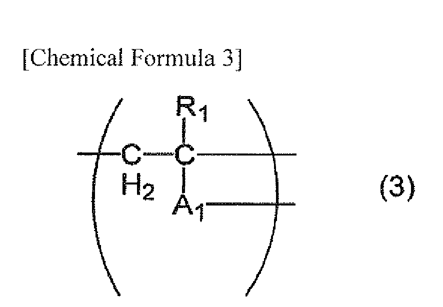 (in Formulae (1) to (3), R₁ represents a hydrogen atom or a methyl group; R₂ represents a hydrogen atom, a linear or branched hydroxyalkyl group having 1 to 20 carbon atoms, or a linear or branched alkyl group containing an epoxy group and having 3 to 20 carbon atoms; and A₁ represents a structure represented by following Formula (4) or Formula (5)), 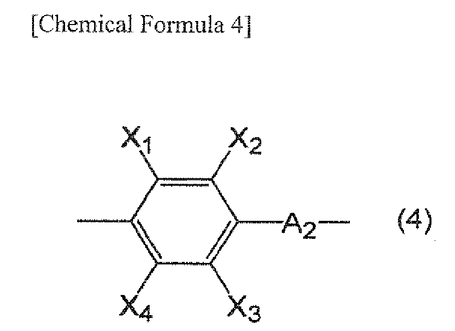 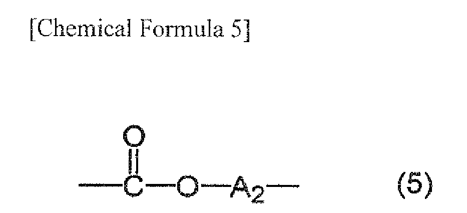 (in Formulae (4) and (5), A₂ represents a linear, branched or cyclic alkylene group having I to 20 carbon atoms which may contain an ether bond or an ester bond; and each of X₁, X₂, X₃ and X₄ represents a hydrogen atom, an alkyl group having 1 to 20 carbon atoms or an alkoxy group having 1 to 20 carbon atoms).

According to a second aspect, the hyperbranched polymer according to the first aspect, having a dithiocarbamate group at a molecular terminal thereof.
According to a third aspect, in the hyperbranched polymer according to the first aspect, with respect to the ratio between the total number of repeating units represented by Formula (2) having a linear structure and the total number of repeating units represented by Formula (3) having a branched structure which are contained in the polymer, the amount of repeating units represented by Formula (2) having a linear structure is 1 mol% to 90 mol% and the amount of repeating units represented by Formula (3) having a branched structure is 99 mol% to 10 mol%, based on the total amount of the repeating units represented by Formula (2) and the repeating units represented by Formula (3).
According to a fourth aspect, in the hyperbranched polymer according to the first aspect, the A₁ is a structure represented by following Formula (6): 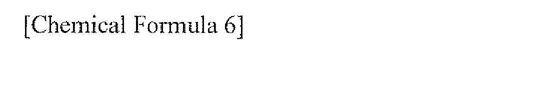 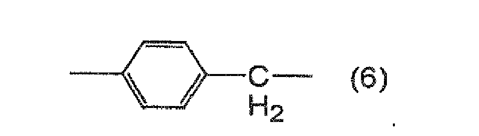 According to a fifth aspect, in the hyperbranched polymer according to the first aspect, the A₁ is a structure represented by following Formula (7): 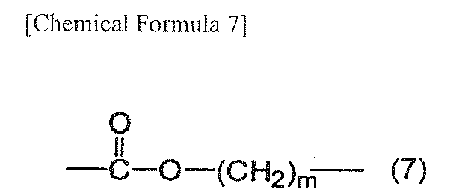 (where m represents an integer of 2 to 10).
According to a sixth aspect, in the hyperbranched polymer according to the first aspect, a weight average molecular weight is 500 to 5,000,000, as measured by a gel permeation chromatography in a converted molecular weight as polystyrene.

According to a seventh aspect, a method for producing the hyperbranched polymer according to the first aspect including: holding a dithiocarbamate compound represented by following Formula (8) and a (meth)acrylate compound represented by following Formula (9) together; and subjecting them to a living-radical polymerization 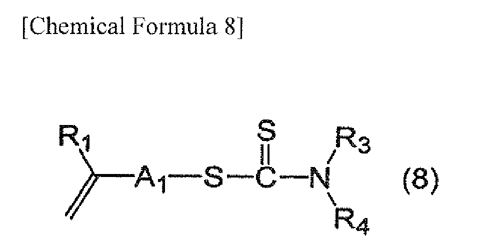 (where R₁ and A₁ represent the same as defined in Formulae (1) to (3); each of R₃ and R₄ represents an alkyl group having 1 to 5 carbon atoms, a hydroxyalkyl group having 1 to 5 carbon atoms or an arylalkyl group having 7 to 12 carbon atoms; and R₃ and R₄ may be bonded to each other to form a ring together with a nitrogen atom bonded to R₃ and R₄), 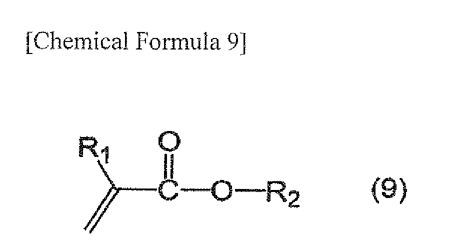 (where R₁ and R₂ represent the same as defined above).
According to an eighth aspect, the method for producing the hyperbranched polymer, according to the seventh aspect including: dissolving the dithiocarbamate compound represented by Formula (8) and the (meth)acrylate compound represented by Formula (9) in a solvent; and subjecting them to a living-radical polymerization by irradiating ultraviolet rays.
According to a ninth aspect, in the method for producing the hyperbranched polymer, according to the seventh or eighth aspect, the dithiocarbamate compound represented by Formula (8) is N,N-diethyldithiocarbamylmethylstyrene or N,N-diethyldithiocarbamylethyl methacrylate.
According to a tenth aspect, in the method for producing the hyperbranched polymer, according to the seventh or eighth aspect, the (meth)acrylate compound represented by Formula (9) is 2-hydroxyethyl methacrylate, glycidyl methacrylate or methacrylic acid.
According to an eleventh aspect, in the method for producing the hyperbranched polymer, according to the seventh or eighth aspect, the dithiocarbamate compound represented by Formula (8) is N,N-diethyldithiocarbamylmethylstyrene or N,N-diethyldithiocarbamylethyl methacrylate and the (meth)acrylate compound represented by Formula (9) is 2-hydroxyethyl methacrylate, glycidyl methacrylate or methacrylic acid.

### [Effects of the Invention]

Since the hyperbranched polymer of the present invention has functional groups such as a hydroxyl group, an epoxy group or a carboxyl group in a molecular chain of the repeating unit thereof, the characteristics thereof such as the degree of crosslinking can be controlled by a mixing ratio of a crosslinker or the like, so that it is excellent in the degree of freedom of the reactivity. In addition, by the production method of the present invention, a hyperbranched polymer having functional groups in a molecular chain of the repeating unit thereof can be easily and efficiently obtained without metamorphosing the molecular terminal.

### BEST MODES FOR CARRYING OUT THE INVENTION

The hyperbranched polymer of the present invention is a hyperbranched polymer having a structural formula represented by Formula (1) as a polymerization initiation site, and having a repeating unit represented by Formula (2) having a linear structure and a repeating unit represented by Formula (3) having a branched structure.
In addition, it is also a hyperbranched polymer in which the total number of the repeating units represented by Formula (2) having a linear structure is an integer of 1 to 100,000 and the total number of the repeating units represented by Formula (3) having a branched structure is an integer of 2 to 100,000.
R₁ in Formula (1) represents a hydrogen atom or a methyl group.
R₂ in Formula (2) represents a hydrogen atom, a linear or branched hydroxyalkyl group having 1 to 20 carbon atoms, or a linear or branched alkyl group containing an epoxy group and having 3 to 20 carbon atoms.
In addition, A₁ in Formulae (1) and (3) represents a structure represented by Formula (4) or Formula (5). In Formulae (4) and (5), A₂ represents a linear, branched or cyclic alkylene group having 1 to 20 carbon atoms which may contain an ether bond or an ester bond, and each of X₁, X₂, X₃ and X₄ represents a hydrogen atom, an alkyl group having 1 to 20 carbon atoms or an alkoxy group having 1 to 20 carbon atoms.
First, specific examples of the hydroxyalkyl group of R₂ include: linear hydroxyalkyl groups such as a hydroxyethyl, 2-hydroxyethyl, 3-hydroxypropyl and 4-hydroxybutyl group; and branched hydroxyalkyl groups such as 2-hydroxypropyl, 2-hydroxybutyl, 3-hydroxybutyl, 2-methyl-3-hydroxypropyl and 3-methyl-2-hydroxypropyl group.
Specific examples of the alkyl group containing an epoxy group include: linear alkyl groups containing an epoxy group such as glycidyl, glycidylmethyl, 2-glycidylethyl, 3-glycidylpropyl, 4-glycidylbutyl, 3,4-epoxybutyl, 4,5-epoxypentyl and 5,6-epoxyhexyl; and branched alkyl groups containing an epoxy group such as β-methylglycidyl, β-ethylglycidyl, β-propylglycidyl, 2-glycidylpropyl, 2-glycidylbutyl, 3-glycidylbutyl, 2-methyl-3-glycidylpropyl, 3-methyl-2-glycidylpropyl, 3-methyl-3,4-epoxybutyl, 3-ethyl-3,4-epoxybutyl, 4-methyl-4,5-epoxypentyl and 5-methyl-5,6-epoxyhexyl.
Specific examples of the alkylene group of A₂ include: linear alkylene such as methylene, ethylene, n-propylene, n-butylene and n-hexylene; and branched alkylene such as isopropylene, isobutylene and 2-methylpropylene. In addition, examples of the cyclic alkylene include alicyclic aliphatic groups having a monocyclic, polycyclic or crosslinked cyclic structure and having 3 to 30 carbon atoms. Specific examples thereof may include groups having 4 or more carbon atoms and having a monocyclo, bicyclo, tricyclo, tetracyclo and pentacyclo structure.

For example, structural examples (a) to (s) of the alicyclic part in the alicyclic aliphatic group are shown as follows. 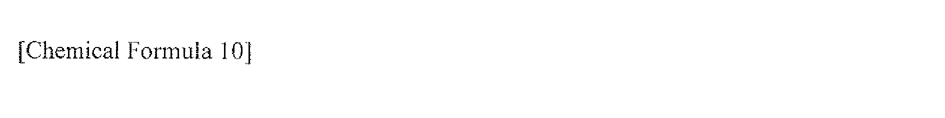 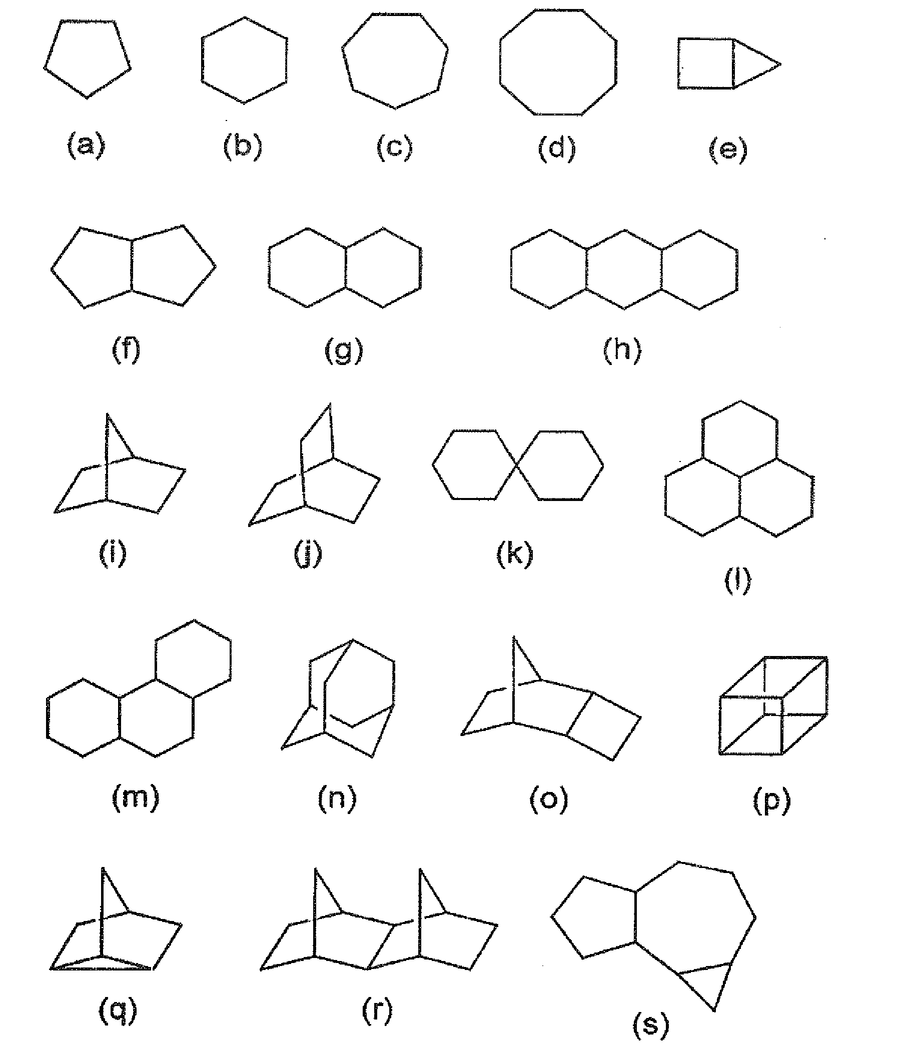 Specific examples of the alkyl group having I to 20 carbon atoms represented by X₁, X₂, X₃ and X₄ include a methyl group, an ethyl group, an isopropyl group, a cyclohexyl group and an n-pentyl group. In addition, specific examples of the alkoxy group having 1 to 20 carbon atoms include a methoxy group, an ethoxy group, an isopropoxy group, a cyclohexyloxy group and an n-pentyloxy group. Particularly, preferred examples of X₁, X₂, X₃ and X₄ include a hydrogen atom or an alkyl group having 1 to 20 carbon atoms.
As A₁ in Formula (1), a structure represented by Formula (6) or Formula (7) is preferred.
In Formula (7), m represents an integer of 2 to 10 and is preferably 2 or 3.

Next, the coupled state of the hyperbranched polymer of the present invention is described.
In the hyperbranched polymer of the present invention, to a polymerization initiation site having a structural formula represented by following Formula (1), repeating units represented by Formula (2) having a linear structure and repeating units represented by Formula (3) having a branched structure are coupled through a random copolymerization. 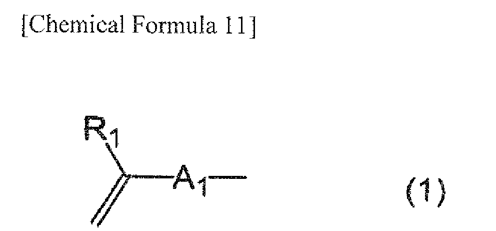 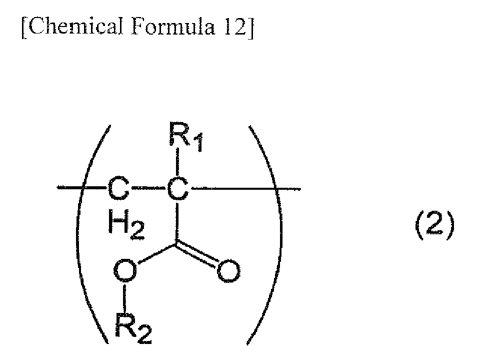 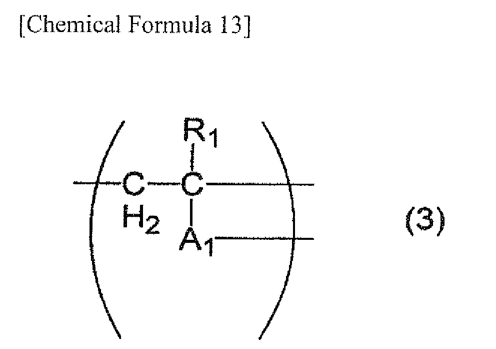 First, a structure in which repeating units represented by Formula (3) having a branched structure are coupled to the polymerization initiation site of a structural formula represented by Formula (1) and the molecular terminal is a dithiocarbamate group, is exemplified.
When the number of repeating units represented by Formula (3) having a branched structure is 2, as the structure thereof, following Formulae (10) and (11) can be expected. The repeating units having a branched structure of the hyperbranched polymer of the present invention in which branched structures represented by Formula (3) are coupled to the polymerization initiation site having a structural formula represented by Formula (1), include both the structures 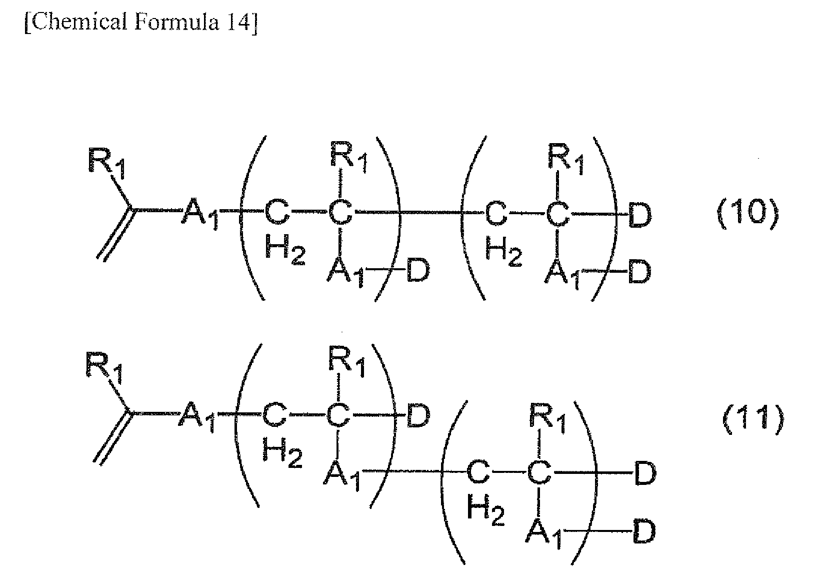 (where R₁ and A₁ represent the same as defined in Formula (1) and D represents a dithiocarbamate group).
When the number of repeating units represented by Formula (3) having a branched structure is 3, one of dithiocarbamate groups at terminals of Formulae (10) and (11) becomes Formula (12): 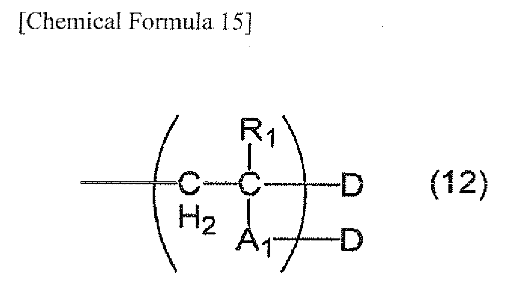 and as the structure thereof, following Formulae (13) to (17) can be expected. 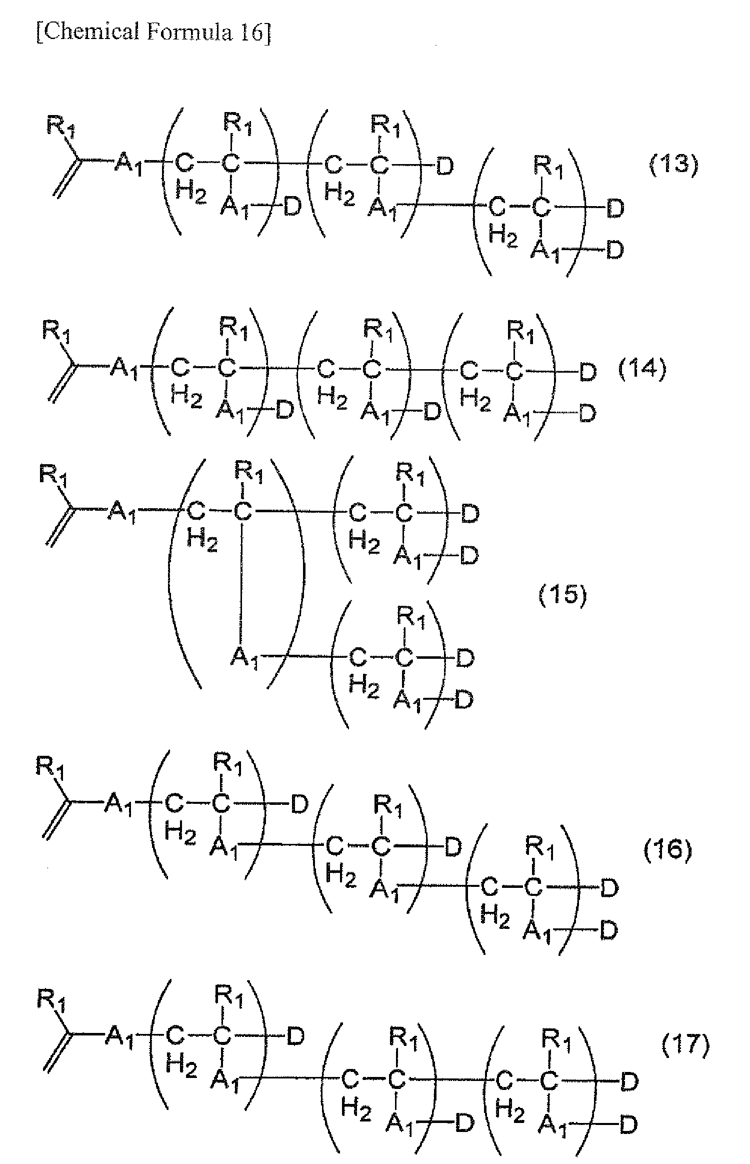 The hyperbranched polymer of the present invention in which the branched structure represented by Formula (3) is coupled to the polymerization initiation site having a structural formula represented by Formula (1), includes any of these structures.
In other words, there are cases where the hyperbranched polymer of the present invention becomes a structure in which repeating unit structures are regularly bonded to at three points and branched structures are formed, and where the hyperbranched polymer becomes a structure in which repeating unit structures are bonded to at two points and no branched structure is formed, but linear structures are formed. However, the present invention encompasses both these hyperbranched polymers, so that when the number of repeating units represented by Formula (3) having a branched structure is 4 or more, further many structures can be expected.

Next, described is a state in which repeating units represented by Formula (2) having a linear structure are coupled to the formula represented by Formulae (10) to (17). Molecular chains having one or more repeating units represented by Formula (2) having a linear structure are coupled between molecular chains having one or more repeating units represented by Formula (3) having each branched structure, or between the molecular chain represented by Formula (3) and the terminal D of the molecular chain. In addition, the molecular chains having one or more repeating units represented by Formula (2) are sometimes coupled between the polymerization initiation site having a structural formula represented by Formula (1) and the repeating unit represented by Formula (3) having a branched structure.
When these descriptions are extended to general hyperbranched polymers of the present invention, the hyperbranched polymer of the present invention forms a structure of a random copolymer in such a manner that to the initiation site having a structural formula represented by Formula (1), the molecular chains having one or more repeating units represented by Formula (2) having a linear structure or the molecular chains having one or more repeating units represented by Formula (3) having a branched structure are coupled and further, to which the molecular chains having one or more repeating units represented by Formula (2) having a linear structure and the molecular chains having one or more repeating units represented by Formula (3) having a branched structure are coupled.
In other words, the general hyperbranched polymers of the present invention are produced by chain-coupling in a hyperbranched polymer-shape in such a manner that to each of three bonding hands of Formula (3), one bonding of the above repeating unit of Formula (2) is bonded, and another bonding hand thereof is bonded to a bonding hand of another Formula (3).
Then, in the whole structure of the hyperbranched polymer of the present invention, the total number of repeating units represented by Formula (2) having a linear structure is 1 to 100,000 and the total number of repeating units represented by Formula (3) having a branched structure is 2 to 100,000.
Further, in the hyperbranched polymer of the present invention, with respect to the ratio between the total number of the repeating units represented by Formula (2) having a linear structure and the total number of the repeating units represented by Formula (3) having a branched structure which are contained in the polymer, the amount of the repeating units represented by Formula (2) having a linear structure is 1 mol% to 90 mol% and the amount of the repeating units represented by Formula (3) having a branched structure is 99 mol% to 10 mol%, based on the total amount of the repeating units represented by Formulae (2) and (3). And also the repeating units having a linear structure and the repeating units having a branched structure constitute a structure of a random copolymer.
In addition, each of repeating units may partially form block polymer moieties. For causing the hyperbranched polymer of the present invention to exhibit better characteristics as the hyperbranched polymer, the amount of the repeating units represented by Formula (2) having a linear structure is 1 mol% to 70 mol% and the amount of the repeating units represented by Formula (3) having a branched structure is 99 mol% to 30 mol%.
The hyperbranched polymer of the present invention has a weight average molecular weight Mw (measured by a gel permeation chromatography in a converted molecular weight as polystyrene) of 500 to 5,000,000, preferably 1,000 to 1,000,000, more preferably 1,500 to 500,000. The degree of dispersion which is a ratio of Mw (weight average molecular weight)/Mn (number average molecular weight) of the hyperbranched polymer is 1.0 to 10.0, preferably 1.1 to 9.0, more preferably 1.2 to 8.0.

Next, the production method of the hyperbranched polymer of the present invention is described.
The hyperbranched polymer of the present invention can be produced by holding the dithiocarbamate compound represented by Formula (8) and the (meth)acrylate compound represented by Formula (9) together and by subject them to a living-radical polymerization.
First, the compound represented by following Formula (8) is described. 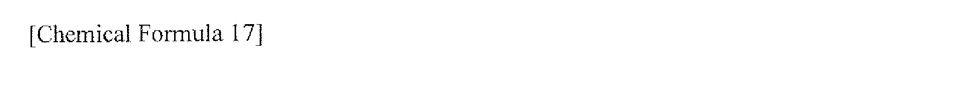 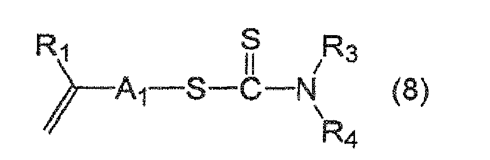 In Formula (8), R₁ and A₁ are the same as defined in Formulae (1), (2) and (3). Each of R₃ and R₄ represents an alkyl group having 1 to 5 carbon atoms, a hydroxyalkyl group having 1 to 5 carbon atoms or an arylalkyl group having 7 to 12 carbon atoms. R₃ and R₄ may be bonded to each other to form a ring together with a nitrogen atom bonded to R₃ and R₄.
Specific examples of the alkyl group having 1 to 5 carbon atoms include a methyl group, an ethyl group, an isopropyl group, a t-butyl group, a cyclopentyl group, an n-pentyl group. Specific examples of the hydroxyalkyl group having 1 to 5 carbon atoms include a hydroxyethyl group, a hydroxyethyl group and a hydroxypropyl group.
Specific examples of the arylalkyl group having 7 to 12 carbon atoms include a benzyl group and a phenethyl group.
Examples of the ring formed with R₃ and R₄ which are bonded to each other and together with a nitrogen atom bonded to R₃ and R₄ include a 4- to 8-membered ring; a ring containing 4 to 6 methylene groups in the ring; and a ring including an oxygen atom or a sulfur atom, and 4 to 6 methylene groups in the ring. Specific examples of the ring formed with R₃ and R₄ which are bonded to each other and together with a nitrogen atom bonded to R₃ and R₄ include a piperizine ring, a pyrrolidine ring, a morpholine ring, a thiomorpholine ring and a homopiperizine ring.
The compound represented by Formula (8) can be easily obtained by a nucleophilic substitution reaction between a compound represented by following Formula (18) and a compound represented by following Formula (19). 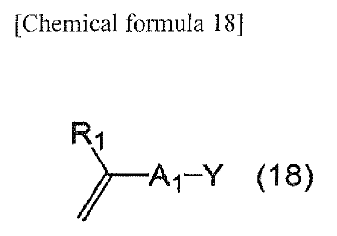 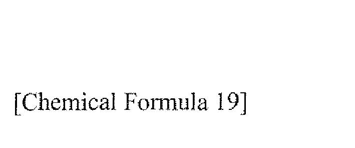 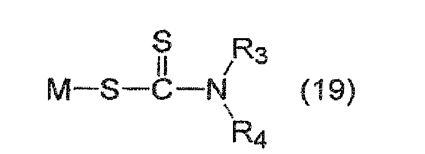 In the Formula (18), Y represents a leaving group. Examples of the leaving group include a fluoro group, a chloro group, a bromo group, an iodo group, a mesyl group and a tosyl group. In Formula (19), M represents lithium, sodium or potassium.
The nucleophilic substitution reaction is usually performed preferably in an organic solvent capable of dissolving both the above two types of compounds. After the completion of the reaction, by a liquid separation treatment into water/nonaqueous organic solvent or by a recrystallization treatment, the compound represented by Formula (8) can be obtained in a high purity. Also, the compound represented by Formula (8) can be produced referring to methods described in "Macromol. Rapid Common. 21, 665-668 (2000)" and in "Polymer International 51, 424-428 (2002)".
Specific examples of the compound represented by Formula (8) include N,N-diethyldithiocarbamylmethylstyrene and N,N- diethyldithiocarbamylethyl methacrylate.

Specific examples of the (meth)acrylate compound represented by Formula (9) are as follows. 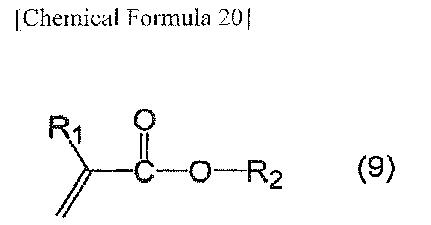 In Formula (9), R₁ represents a hydrogen atom or a methyl group and R₂ represents a hydrogen atom, a linear or branched hydroxyalkyl group having 1 to 20 carbon atoms, or a linear or branched alkyl group containing an epoxy and having 2 to 20 carbon atoms.
Specific examples of the (meth)acrylate compound represented by Formula (9) include (meth)acrylic acid, hydroxymethyl (meth)acrylate, 2-hydroxyethyl (meth)acrylate, 3-hydroxypropyl (meth)acrylate, 4-hydroxybutyl (meth)acrylate, 2-hydroxypropyl (meth)acrylate, glycidyl (meth)acrylate, β-methylglycidyl (meth)acrylate, β-ethylglycidyl (meth)acrylate, β-propylglycidyl (meth)acrylate, 3,4-epoxybutyl (meth)acrylate, 3-methyl-3,4-epoxybutyl (meth)acrylate, 3-ethyl-3,4-epoxybutyl (meth)acrylate, 4-methyl-4,5-epoxypentyl (meth)acrylate and 5-methyl-5,6-epoxyhexyl (meth)acrylate. Here, in the present invention, the (meth)acrylate compound refers to both an acrylate compound and a methacrylate compound. For example, hydroxymethyl (meth)acrylate refers to hydroxymethyl acrylate and hydroxymethyl methacrylate.

Then, by holding the dithiocarbamate compound represented by Formula (8) and the (meth)acrylate compound represented by Formula (9) together and by subjecting them to a living-radical polymerization, the hyperbranched polymer having the structure of the present invention in which the molecular terminal is a dithiocarbamate group can be obtained.
The living-radical polymerization can be performed by a heretofore known polymerization method, such as a bulk polymerization, a solution polymerization, a suspension polymerization and an emulsion polymerization. Particularly, the solution polymerization is preferred.
In the case of the solution polymerization, in a solvent capable of dissolving the compound represented by Formula (8) and the compound represented by Formula (9), the polymerization reaction can be performed at any concentration. The amount of the compound represented by Formula (9) relative to the amount of the compound represented by Formula (8) is 0.01 molar equivalent to 9 molar equivalent, preferably 0.05 molar equivalent to 7 molar equivalent, more preferably 0.1 molar equivalent to 5 molar equivalent.
Additionally, in the case of the solution polymerization, though the concentrations of the compound represented by Formula (8) and the compound represented by Formula (9) in the solution may be any one, the total amount of the compound represented by Formula (8) and the compound represented by Formula (9) is 1% by mass to 80% by mass, preferably 2% by mass to 70% by mass, more preferably 5% by mass to 60% by mass, based on the total mass (total mass of the compound represented by Formula (8), the compound represented by Formula (9) and the solvent).
In addition, as the solvent used for the solution polymerization, preferred is a solvent capable of dissolving the compound represented by Formula (8) and the compound represented by Formula (9). Examples of the solvent include: aromatic hydrocarbons such as benzene, toluene, xylene and ethyl benzene; ether compounds such as tetrahydrofuran and diethyl ether; ketone compounds such as acetone, methyl ethyl ketone, methyl isobutyl ketone and cyclohexanone; and aliphatic hydrocarbons such as n-heptane, n-hexane and cyclohexane. These solvents may be used individually or in combination of two or more types thereof.
Further, the living-radical polymerization of the compound represented by Formula (8) and the compound represented by Formula (9) which are held together can be performed in a solvent containing these compounds by heating or irradiating a light, such as ultraviolet rays. Particularly, the polymerization is preferably performed by irradiating a light such as ultraviolet rays. The light irradiation can be performed by irradiating from the inside or outside of the reaction system using an ultraviolet ray irradiating lamp such as a low-pressure mercury lamp, a high-pressure mercury lamp, an ultra high-pressure mercury lamp and a xenone lamp.
In these living-radical polymerizations, it is necessary that before the initiation of the polymerization, oxygen in the reaction system is fully removed and the inside of the reaction system is preferably replaced with an inert gas, such as nitrogen and argon.
The polymerization temperature is not particularly limited. However, it is 0°C to 200°C, preferably 5°C to 150°C, more preferably 10°C to 100°C. The polymerization time is 0.1 hours to 100 hours, preferably 0.5 hours to 50 hours, more preferably 1 hour to 30 hours. Usually, according to the time course of the polymerization, the conversion ratio of the monomer (the compound represented by Formula (8) and the compound represented by Formula (9)) is elevated. Preferably, the polymerization temperature is 15°C to 60°C and the polymerization time is 1 hour to 10 hours.
In addition, during the living-radical polymerization, the molecular weight and the molecular weight distribution and the degree of branching can be controlled so long as the structure as the hyperbranched polymer is not impaired. For controlling the molecular weight and the molecular weight distribution, a chain transfer agent such as mercaptans and sulfides, or a sulfide compound such as tetraethyl thiuram disulfide can be used. Further, if desired, anti-oxidants such as hindered phenols, ultraviolet rays absorbing agents such as benzotriazoles, polymerization inhibitors such as 4-tert-butylcathecol, hydroquinone, nitrophenol, nitrocresol, picric acid, phenothiazine and dithiobenzoyl disulfide can be used.
The hyperbranched polymer of the present invention obtained by the above-described living-radical polymerization can be separated from the solvent out of the reaction solution by distilling-off the solvent or by solid-liquid separation. Also, by adding the reaction solution into a poor solvent, for example heptane, methanol and hexane, the hyperbranched polymer of the present invention can be precipitated to be recovered as a powder.

Further, by subjecting the hyperbranched polymer of the present invention to a crosslinking reaction through dissolving the hyperbranched polymer in a solvent capable of dissolving the hyperbranched polymer such as tetrahydrofuran and cyclohexanone, mixing a crosslinker into the resultant solution, and heating or irradiating a radiation to the resultant mixture, the hyperbranched polymer can be cured.
In the case of curing the hyperbranched polymer by a crosslinking reaction, the crosslinker is not particularly limited so long as it can be crosslinked to functional groups in the structure of the hyperbranched polymer, however, crosslinkable compounds having at least two crosslinkage-forming substituents can be preferably used.
For example, when the hyperbranched polymer of the present invention in which hydroxyl groups or carboxyl groups are introduced is cured by a crosslinking reaction, commercially available hexamethoxymethylolmelamine (Cymel 300, Cymel 301 or Cymel 303; manufactured by MT AquaPolymer,Inc.), methylbutyl mixed-etherified methylolmelamine (Cymel 238, Cymel 232 or Cymel 266; manufactured by MT AquaPolymer,Inc.), n-butyl-etherified methylolmelamine (Super Beckamine L-164; manufactured by DIC Corporation), teteramethoxyglycoluril (POWDERLINK 1174; manufactured by American Cyanamid Co., U.S.), or the like can be used.
Further, when the hyperbranched polymer in which hydroxyl groups or carboxyl groups are introduced is cured by the crosslinker, acid compounds such as p-toluenesulfonic acid can be used in a combination thereof.
In addition, when the hyperbranched polymer of the present invention in which epoxy groups are introduced is cured by a crosslinking reaction, commercially available alkylsulfonium salts which is a mixture of crotyl tetramethylenesulfonium hexafluoro antimonate, or the like (Adeka Opton CP-66; manufactured by Adeka Corporation) and alkylsulfonium salts which is a mixture of prenyl tetramethylenesulfonium hexafluoro antimonate, or the like (Adeka Opton CP-77; manufactured by Adeka Corporation) can be used. Here, also the hyperbranched polymer of the present invention in which carboxyl groups are introduced can be used as the crosslinker.
Further, when the crosslinking is performed by irradiating a radiation, diaryl iodonium salts, triaryl sulfonium salts, diaryl phosphonium salts, and the like which are commercially available as a radiation cationic curing catalyst generating acids, can be used.
The crosslinker is not limited to these exemplified substances.

### [Examples]

Hereinafter, the present invention is described in more detail referring to examples which should not be construed as limiting the scope of the present invention.
In the following Examples, for each measurement of physical properties of the sample, the following apparatuses were used.
(1) Liquid Chromatography:
   Apparatus: manufactured by Agilent; 1100 Series
   Column: Inertsil ODS-2
   Column temp.: 40°C
   Solvent: Acetonitrile/water = 60/40 (volume ratio)
   Detector: RI
(2) Gel Permeation Chromatography
   Apparatus: manufactured by Tosoh Corporation; HLC-8220GPC
   Column: Shodex KF-805L+KF-804L
   Column temp.: 40°C
   Solvent: Tetrahydrofuran
   Detector: RI
(3) Melting Point Analysis
   Apparatus: manufactured by Rigaku Corporation; DSC8230
   Heating rate: 2°C/min
   Nitrogen supply: 60 mL/min
(4) ¹³C-NMR
   Apparatus: manufactured by JEOL DATUM LTD.; JNM-ECA700
   Measuring method: gate decoupling method (NOE elimination) ¹³C-NMR
   Integration times: 5,000 times
   Waiting time: 10 seconds
   Solvent: CDCl₃, d₆-DMSO
   Internal standard: tetramethylsilane
(5) AFM Measurement
   Apparatus: manufactured by Veeco Instruments Inc.; Dimension 3100
   Probe material: single crystal silicone
   Measurement mode: Tapping mode
(6) Film Thickness Measurement
   Apparatus: manufactured by Kosaka Laboratory Ltd.; High precision microfigure measuring instrument SURFCORDER ET4000A

### [Reference Example 1]

Synthesis of N,N-diethyldithiocarbamylmethylstyrene In a 2L reaction flask, 120 g of chloromethylstyrene (manufactured by Seimi Chemical Co., Ltd.; trade name: CMS-14), 181 g of Sodium N,N-diethyldithiocarbamate trihydrate (manufactured by Kanto Chemical Co., Inc.) and 1,400 g of acetone were charged and while stirring the resultant mixture, the mixture was reacted at a temperature of 40°C for 1 hour. After the completion of the reaction, deposited sodium chloride was filtered to be removed and then, acetone was distilled off from the reaction solution using an evaporator to thereby obtaining a crude powder. The obtained crude powder was redissolved in toluene and the resultant liquid was separated in toluene/water. Thereafter, in a refrigerator having a temperature of -20°C, an objective was recrystallized from the toluene phase. The recrystallized substance was filtered and vacuum-dried to thereby obtaining 206 g (yield; 97%) of an objective in the form of a white powder. The purity (area percentage) was 100% as measured by a liquid chromatography. The melting point was 56°C.

### [Example 1]

### Synthesis of Styrene - 2-Hydroxyethyl Methacrylate-based Hyperbranched Polymer Having Dithiocarbamate Group at Molecular Terminal Thereof

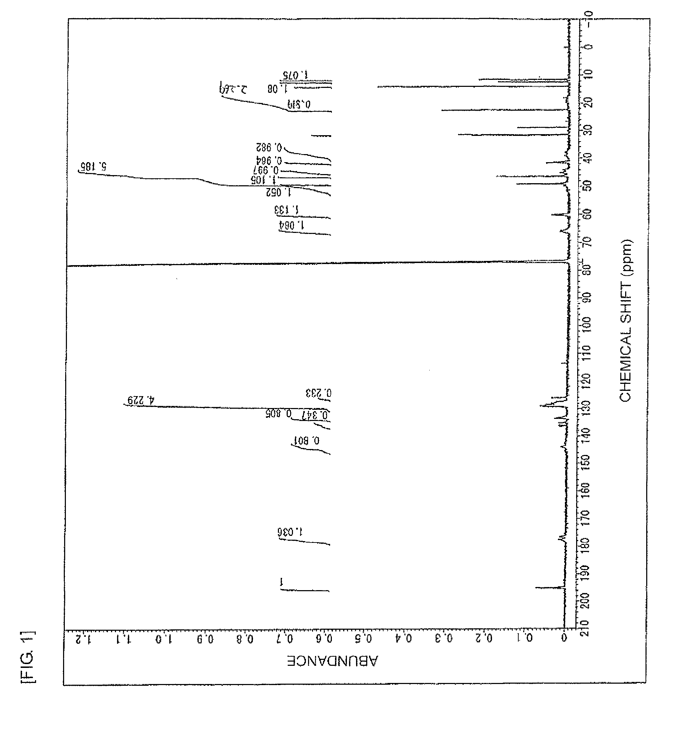

In a 300 mL glass-made reaction flask, 80 g of N,N-diethyldithiocarbamylmethylstyrene, 40 g of 2-hydroxyethyl methacrylate (manufactured by JUNSEI CHEMICAL Co. Ltd.) and 80 g of tetrahydrofuran were charged and the resultant mixture was stirred to prepare a pale yellow transparent solution, followed by replacing the inside of the reaction system with nitrogen. From the center of the solution, a high pressure mercury lamp of 100 W (manufactured by Sen Lights Co., Ltd.; HL-100) was lighted to perform a photopolymerization reaction by an internal irradiation while stirring the reaction solution at a temperature of 30 ± 5°C for 4 hours. Next, to the reaction solution, 200 g of tetrahydrofuran was added to dilute the reaction solution and thereafter, the diluted reaction solution was added to 2.5 L of heptane to thereby reprecipitating a polymer having high viscosity in a massive state, followed by removing the supernatant liquid by a decantation. Further, the polymer was redissolved in 120 g of tetrahydrofuran and thereafter, the resultant solution was added to 2.5 L of heptane to reprecipitate the polymer in a slurry state. The slurry was filtered and the obtained polymer was redissolved in 60 g of tetrahydrofuran. Thereafter, the resultant solution was added to 1 L of heptane to reprecipitate the polymer in a slurry state. The resultant slurry was filtered and vacuum-dried to thereby obtaining 14.8 g of an objective in the form of a pale yellow powder. The weight average molecular weight Mw and the degree of dispersion Mw/Mn of the obtained polymer were measured by a gel permeation chromatography, in a converted molecular weight as polystyrene, and found to be 41,000 and 5.87, respectively.
The obtained hyperbranched polymer is a hyperbranched polymer having a structural formula represented by following Formula (20) as a polymerization initiation site and having a repeating unit represented by Formula (21) having a linear structure and a repeating unit represented by Formula (22) having a branched structure. 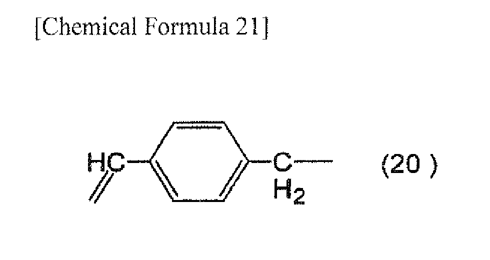 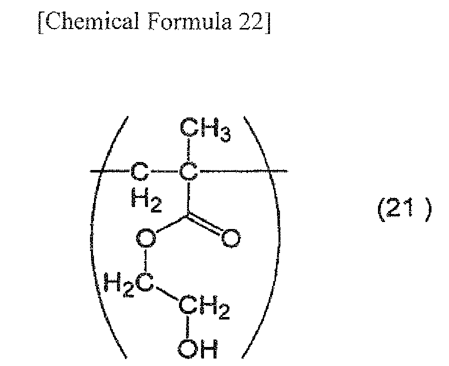 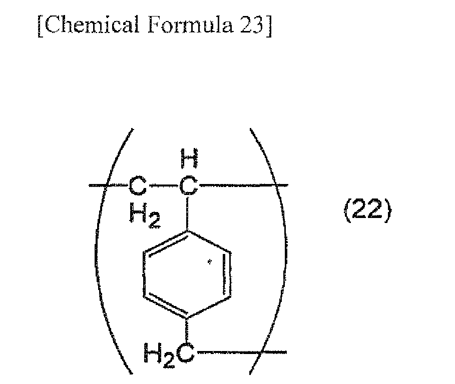 The results of ¹³C-NMR measurement of the obtained polymer are shown in FIG. 1. From an average value of integrated values of peaks ascribed to 195 ppm and 12 ppm of N,N-diethyldithiocarbamylmethylstyrene as chemical shifts and an average value of integrated values of peaks ascribed to 177 ppm and 60 ppm of 2-hydroxy methacrylate as chemical shifts, it was determined that the ratio of the total amount of a repeating unit represented by Formula (21) having a linear structure : the total amount of a repeating unit represented by Formula (22) having a branched structure is 1.0 : 1.0.

Next, a solution in which 1 g of the hyperbranched polymer obtained in Example 1 was dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 200°C for 10 minutes to obtain a thin film having a film thickness of 271 nm. The surface of the thin film was observed by an AFM measurement. Such an appearance was observed that the obtained thin film was in a uniformity surface having a surface roughness of 0.25 nm. The thin film was dissolved in tetrahydrofuran and N-methyl-2-pyrrolidone which are good solvents for the obtained hyperbranched polymer.

Further, a solution in which 1 g of the hyperbranched polymer obtained in Example 1, 0.3 g of hexamethoxymethylolmelamine (Cymel 303, manufactured by MT AquaPolymer,Inc.) and 0.03 g of p-toluenesulfonic acid (manufactured by Tokyo Chemical Industry Co., Ltd.) were dissolved in 9 g of cyclohexanone was prepared.
This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 200°C for 10 minutes to obtain a thin film having a film thickness of 311 nm. The surface of the thin film was observed by an AFM measurement. Such an appearance was observed that the obtained thin film was in a uniformity surface having a surface roughness of 0.25 nm. In addition, the thin film was not dissolved in tetrahydrofuran and N-methyl-2-pyrrolidone which are good solvents for the obtained hyperbranched polymer, so that it was apparently crosslinked.

### [Example 2]

### Synthesis of Styrene - Glycidyl Methacrylate-based Hyperbranched Polymer Having Dithiocarbamate Group at Molecular Terminal Thereof

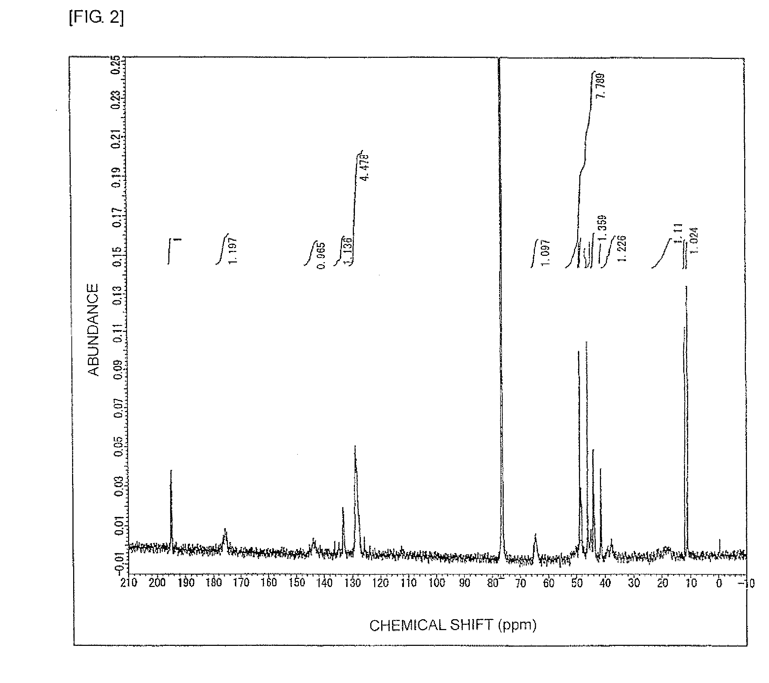

In a 50 mL glass-made reaction flask, 20 g of N,N-diethyldithiocarbamylmethylstyrene, 10.7 g of glycidyl methacrylate (manufactured by Sigma-Aldrich Corp.) and 20.5 g of tetrahydrofuran were charged and the resultant mixture was stirred to prepare a pale yellow transparent solution, followed by replacing the inside of the reaction system with nitrogen. From the position being distant from the solution by 10 ± 3 cm, a high pressure mercury lamp of 100 W (manufactured by Sen Lights Co., Ltd.; HL-100) was lighted to perform a photopolymerization reaction by an external irradiation while stirring the reaction solution at a temperature of 20 ± 5°C for 7 hours. Next, to the reaction solution, 60 g of tetrahydrofuran was added to dilute the reaction solution and thereafter, the diluted reaction solution was added to 1.5 L of methanol to thereby reprecipitating a polymer in a slurry state. The slurry was filtered and the obtained polymer was redissolved in 60 g of tetrahydrofuran, followed by adding the resultant solution to 1.5 L of methanol to reprecipitate the polymer in a slurry state. The slurry was filtered and vacuum-dried to thereby obtaining 9.9 g of an objective in the form of a pale yellow powder. The weight average molecular weight Mw and the degree of dispersion Mw/Mn of the obtained polymer were measured by a gel permeation chromatography, in a converted molecular weight as polystyrene, and found to be 31,000 and 4.13, respectively.
The obtained hyperbranched polymer is a hyperbranched polymer having a structural formula represented by following Formula (20) as a polymerization initiation site, and having a repeating unit represented by Formula (23) having a linear structure and a repeating unit represented by Formula (22) having a branched structure. 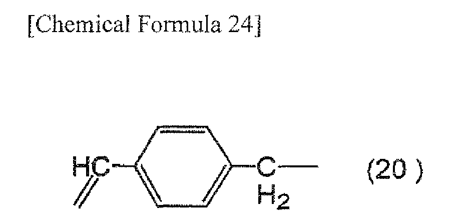 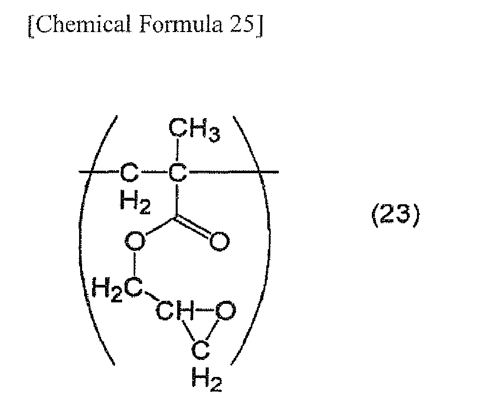 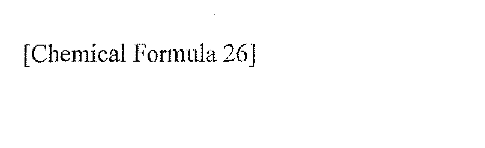 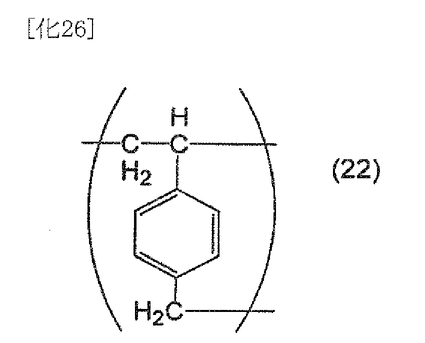 The results of ¹³C-NMR measurement of the obtained polymer are shown in FIG. 2. From an average value of integrated values of peaks ascribed to 195 ppm, 42 ppm and 12 ppm of N,N-diethyldithiocarbamylmethylstyrene as chemical shifts and an average value of integrated values of peaks ascribed to 176 ppm and 65 ppm of glycidyl methacrylate as chemical shifts, it was determined that the ratio of the total amount of a repeating unit represented by Formula (23) having a linear structure : the total amount of a repeating unit represented by Formula (22) having a branched structure is 1.0 : 1.0.

Next, a solution in which 1 g of the hyperbranched polymer obtained in Example 2 was dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at 150°C for 20 minutes to obtain a thin film having a film thickness of 343 nm. The surface of the thin film was observed by an AFM measurement. Such an appearance was observed that the obtained thin film was in a uniformity surface having a surface roughness of 0.32 nm. The thin film was dissolved in tetrahydrofuran and N-methyl-2-pyrrolidone which are good solvents for the obtained hyperbranched polymer.

Further, a solution in which 1 g of the obtained hyperbranched polymer and 0.5 g of alkylsulfonium salts (Adeka Opton CP-66, manufactured by Adeka Corporation) which is a mixture of crotyl tetramethylenesulfonium hexafluoro antimonate or the like were dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method.
Thereafter, the coated substrate was heated on a hot plate at a temperature of 150°C for 20 minutes to obtain a thin film having a film thickness of 337 nm. The surface of the thin film was observed by an AFM measurement. Such an appearance was observed that the obtained thin film was in a uniformity surface having a surface roughness of 0.25 nm. In addition, the thin film was not dissolved in tetrahydrofuran and N-methyl-2-pyrrolidone which are good solvents for the obtained hyperbranched polymer, so that it was apparently crosslinked.

### [Example 3]

### Synthesis of Styrene - Methacrylate-based Hyperbranched Polymer Having Dithiocarbamate Group at Molecular Terminal Thereof

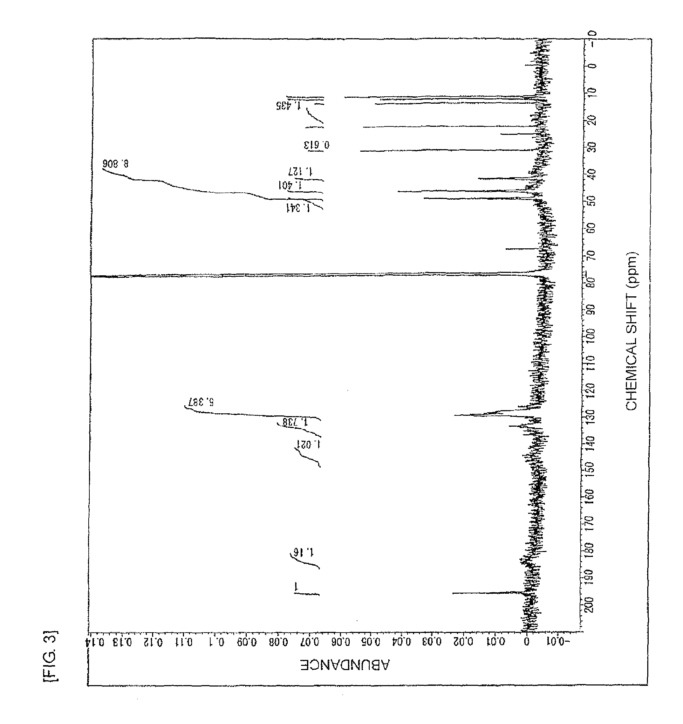

In a 300 mL glass-made reaction flask, 90 g of N,N-diethyldithiocarbamylmethylstyrene, 28.8 g of methacrylic acid (manufactured by Tokyo Chemical Industry Co., Ltd.) and 79 g of tetrahydrofuran were charged and the resultant mixture was stirred to prepare a pale yellow transparent solution, followed by replacing the inside of the reaction system with nitrogen. From the center of this solution, a high pressure mercury lamp of 100 W (manufactured by Sen Lights Co., Ltd.; HL-100) was lighted to perform a photopolymerization reaction by an internal irradiation while stirring the reaction solution at a temperature of 30 ± 5°C for 5 hours. Next, to the reaction solution, 200 g of tetrahydrofuran was added to dilute the reaction solution and thereafter, the diluted reaction solution was added to 2.5 L of hexane to thereby reprecipitating a polymer in a slurry state. The slurry was filtered and the obtained polymer was redissolved in 200 g of tetrahydrofuran, followed by adding the resultant solution to 2.5 L of hexane to reprecipitate the polymer in a slurry state. The slurry was filtered and vacuum-dried to thereby obtaining 12.1 g of an objective in the form of a pale yellow powder. The weight average molecular weight Mw and the degree of dispersion Mw/Mn of the obtained polymer were measured by a gel permeation chromatography, in a converted molecular weight as polystyrene, and found to be 33,000 and 6.60, respectively.
The obtained hyperbranched polymer is a hyperbranched polymer having a structural formula represented by following Formula (20) as a polymerization initiation site, and having a repeating unit represented by Formula (24) having a linear structure and a repeating unit represented by Formula (22) having a branched structure. 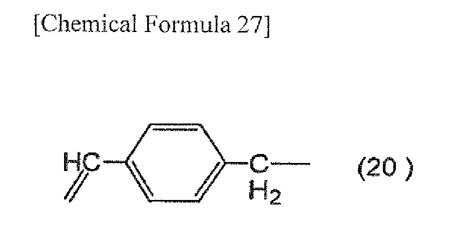 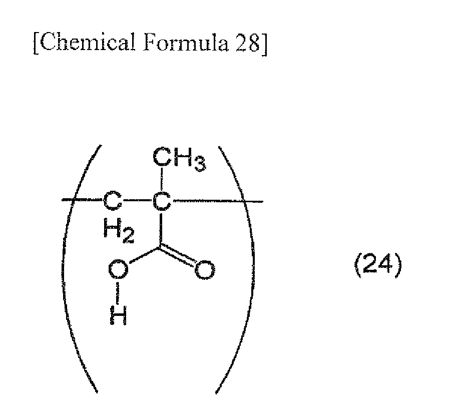 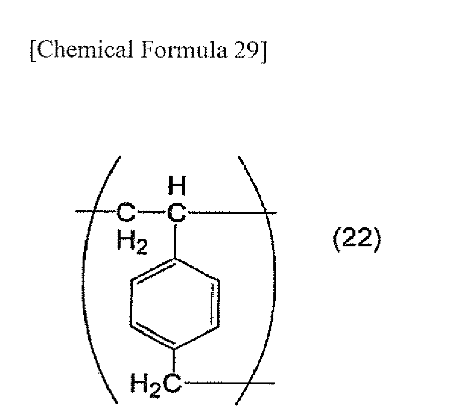 The results of ¹³C-NMR measurement of the obtained polymer are shown in FIG. 3. From an average value of integrated values of peaks ascribed to 195 ppm and 13 ppm of N,N-diethyldithiocarbamylmethylstyrene as chemical shifts and an average value of integrated values of peaks ascribed to 184 ppm of methacrylic acid as chemical shifts, it was determined that the ratio of the total amount of a repeating unit represented by Formula (24) having a linear structure : the total amount of a repeating unit represented by Formula (22) having a branched structure is 1.0 : 1.0.

Next, a solution in which 1 g of the hyperbranched polymer obtained in Example 3 was dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 200°C for 10 minutes to obtain a thin film having a film thickness of 276 nm. The surface of the thin film was observed by an AFM measurement. Such an appearance was observed that the obtained thin film was in a uniformity surface having a surface roughness of 0.37 nm. The thin film was dissolved in tetrahydrofuran and N-methyl-2-pyrrolidone which are good solvents for the obtained hyperbranched polymer.

Further, a solution in which 1 g of the obtained hyperbranched polymer, 0.3 g of hexamethoxymethylolmelamine (Cymel 303, manufactured by MT AquaPolymer,Inc.) and 0.03 g of p-toluenesulfonic acid (manufactured by Tokyo Chemical Industry Co., Ltd.) were dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method.
Thereafter, the coated substrate was heated on a hot plate at a temperature of 200°C for 10 minutes to obtain a thin film having a film thickness of 277 nm. The surface of the thin film was observed by an AFM measurement. Such an appearance was observed that the obtained thin film was in a uniformity surface having a surface roughness of 0.31 nm. In addition, the thin film was not dissolved in tetrahydrofuran and N-methyl-2-pyrrolidone which are good solvents for the obtained hyperbranched polymer, so that it was apparently crosslinked.

### [Reference Example 2]

### Synthesis of N,N-diethyldithiocarbamylethyl methacrylate

In a 2L reaction flask, 100 g of chloroethyl methacrylate (manufactured by Lancaster Synthesis Ltd.), 178 g of Sodium N,N-diethyldithiocarbamate trihydrate (manufactured by Kanto Chemical Co., Inc.) and 1,100 g of acetone were charged and while stirring the resultant mixture, a reaction was performed at a temperature of 40°C for 14 hours. After the completion of the reaction, deposited sodium chloride was filtered to be removed and then, acetone was distilled off from the reaction solution using an evaporator to thereby obtaining a crude powder. The obtained crude powder was redissolved in 1,2-dichloroethane and the resultant liquid was separated into 1,2-dichloroethane/water. Thereafter, 1,2-dichloroethane was distilled off out of the 1,2-dichloroethane phase to thereby obtaining 171 g (yield; 97%) of an objective in the form of a yellow liquid. The purity (area percentage) thereof was 96% as measured by a liquid chromatography.

### [Example 4]

### Synthesis of Acryl - 2-Hydroxyethyl Methacrylate-based Hyperbranched Polymer Having Dithiocarbamate Group at Molecular Terminal Thereof

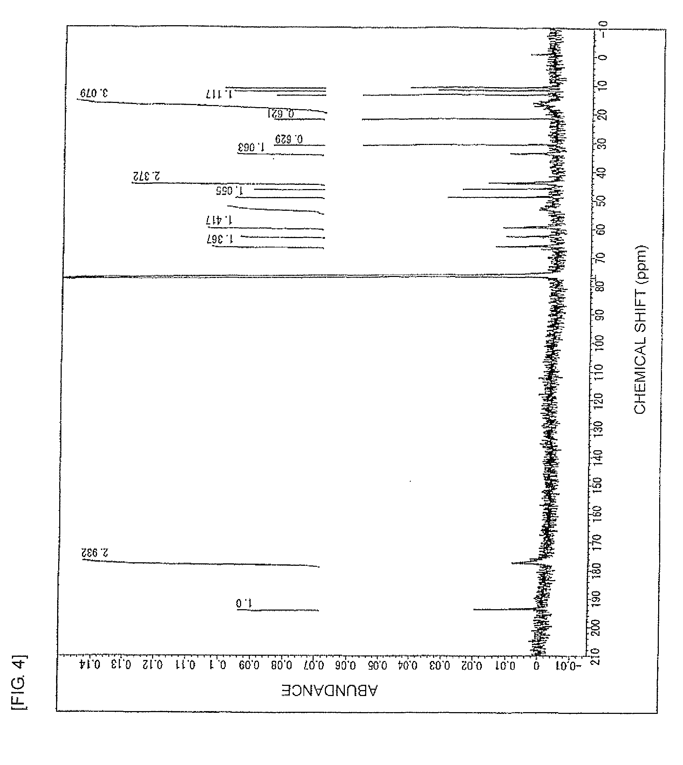

In a 1 L reaction flask, 40 g of N,N-diethyldithiocarbamylethyl methacrylate, 20 g of 2-hydroxyethyl methacrylate (manufactured by JUNSEI CHEMICAL Co. Ltd.) and 400 g of tetrahydrofuran were charged and the resultant mixture was stirred to prepare a pale yellow transparent solution, followed by replacing the inside of the reaction system with nitrogen. From the center of the solution, a high pressure mercury lamp of 100 W (manufactured by Sen Lights Co., Ltd.; HL-100) was lighted to perform a photopolymerization reaction by an internal irradiation while stirring the reaction solution at a temperature of 30 ± 5°C for 6 hours. Next, this reaction solution was added to 3,000 g of hexane to reprecipitate the polymer in a slurry state. The slurry was filtered and the obtained polymer was redissolved in 170 g of tetrahydrofuran. Thereafter, the resultant solution was added to 1,500 g of hexane to reprecipitate the polymer in a slurry state. The resultant slurry was filtered and vacuum-dried to thereby obtaining 27.3 g of an objective in the form of a pale yellow powder. The weight average molecular weight Mw and the degree of dispersion Mw/Mn of the obtained polymer were measured by a gel permeation chromatography, in a converted molecular weight as polystyrene, and found to be 24,000 and 4.06, respectively.
The obtained hyperbranched polymer is a hyperbranched polymer having a structural formula represented by following Formula (25) as a polymerization initiation site and having a repeating unit represented by Formula (21) having a linear structure and a repeating unit represented by Formula (26) having a branched structure. 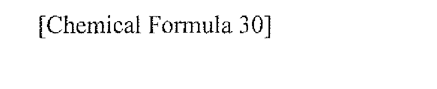 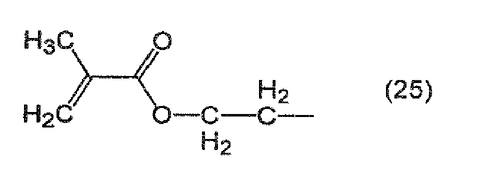 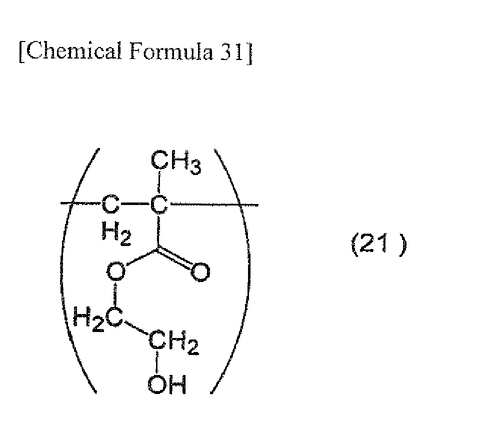 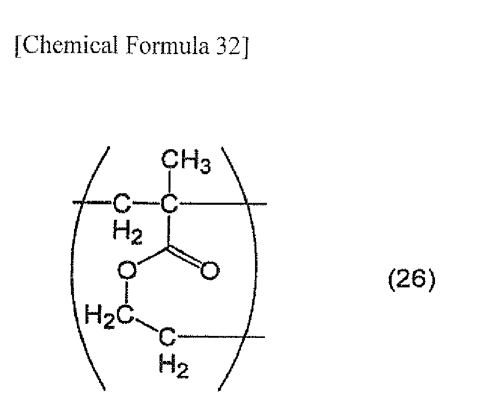 The results of ¹³C-NMR measurement of the obtained polymer are shown in FIG. 4. From an average value of integrated values of peaks ascribed to 194 ppm, 50 ppm and 13 ppm of N,N-diethyldithiocarbamylethyl methacrylate as chemical shifts and an average value of integrated values of peaks ascribed to 67 ppm and 60 ppm of 2-hydroxyethyl methacrylate as chemical shifts, it was determined that the ratio of the total amount of a repeating unit represented by Formula (21) having a linear structure : the total amount of a repeating unit represented by Formula (26) having a branched structure is 1.0 : 0.8.

Next, a solution in which 1 g of the hyperbranched polymer obtained in Example 4 was dissolved in 9 g of cyclohexanone was prepared. This solution was filtered using a microfilter made of polytetrafluoroethylene having a pore diameter of 0.2 µm and was then coated on a glass substrate at 300 rpm for 5 seconds and further at 2,500 rpm for 20 seconds by a spin coating method. Thereafter, the coated substrate was heated on a hot plate at a temperature of 120°C for 10 minutes to obtain a thin film having a film thickness of 151 nm. The surface of the thin film was observed by an AFM measurement. Such an appearance was observed that the obtained thin film was in a uniformity surface having a surface roughness of 0.26 nm. The thin film was dissolved in tetrahydrofuran and N-methyl-2-pyrrolidone which are good solvents for the obtained hyperbranched polymer.

Further, a solution in which 1 g of the obtained hyperbranched polymer, 0.3 g of hexamethoxymethylolmelamine (Cymel 303, manufactured by MT AquaPolymer,Inc.) and 0.03 g of p-toluenesulfonic acid (manufactured by Tokyo Chemical Industry Co., Ltd.) were dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 120°C for 10 minutes to obtain a thin film having a film thickness of 206 nm. The surface of the thin film was observed by an AFM measurement. Such an appearance was observed that the obtained thin film was in a uniformity surface having a surface roughness of 0.26 nm. The thin film was not dissolved in tetrahydrofuran and N-methyl-2-pyrrolidone which are good solvents for the obtained hyperbranched polymer, so that it was apparently crosslinked.

### [Example 5]

### Synthesis of Acryl - Glycidyl Methacrylate-based Hyperbranched Polymer Having Dithiocarbamate Group at Molecular Terminal Thereof

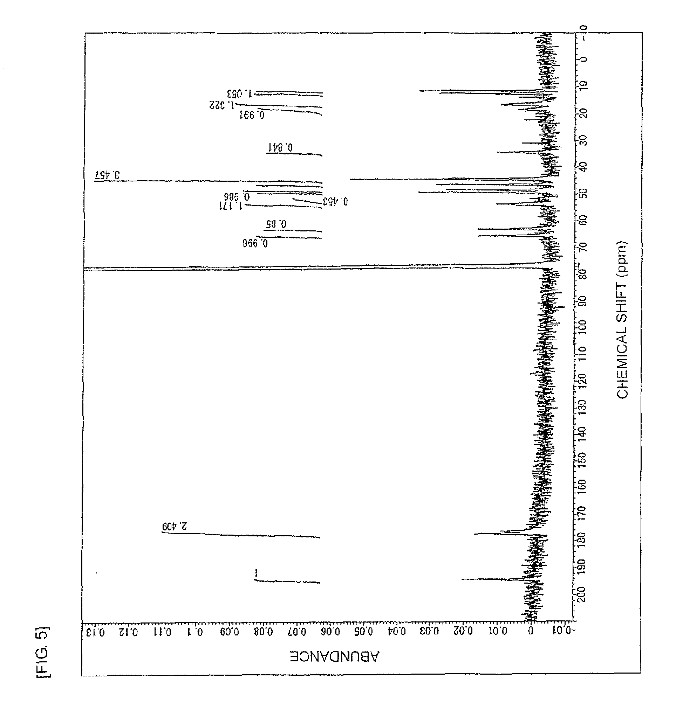

In a 1 L reaction flask, 40 g of N,N-diethyldithiocarbamylethyl methacrylate, 21.8 g of glycidyl methacrylate (manufactured by Sigma-Aldrich Corp.) and 413 g of tetrahydrofuran were charged and the resultant mixture was stirred to prepare a pale yellow transparent solution, followed by replacing the inside of the reaction system with nitrogen. From the center of this solution, a high pressure mercury lamp of 100 W (manufactured by Sen Lights Co., Ltd.; HL-100) was lighted to perform a photopolymerization reaction by an internal irradiation while stirring the reaction solution at a temperature of 30 ± 5°C for 5 hours. Next, the reaction solution was added to 3,000 g of hexane to thereby reprecipitating a polymer in a slurry state. The slurry was filtered and the obtained polymer was redissolved in 170 g of tetrahydrofuran, followed by adding the resultant solution to 1,500 g of hexane to reprecipitate the polymer in a slurry state. The slurry was filtered and vacuum-died to thereby obtaining 22.6 g of an objective in the form of a pale yellow powder. The weight average molecular weight Mw and the degree of dispersion Mw/Mn of the obtained polymer were measured by a gel permeation chromatography, in a converted molecular weight as polystyrene, and found to be 20,000 and 3.36, respectively.
The obtained hyperbranched polymer is a hyperbranched polymer having a structural formula represented by following Formula (25) as a polymerization initiation site, and having a repeating unit represented by Formula (23) having a linear structure and a repeating unit represented by Formula (26) having a branched structure. 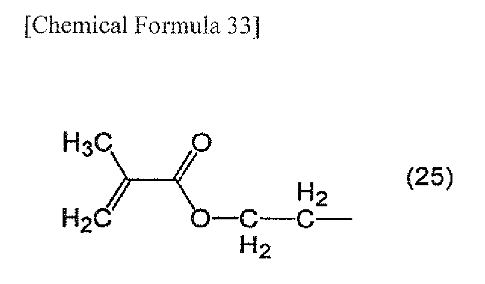 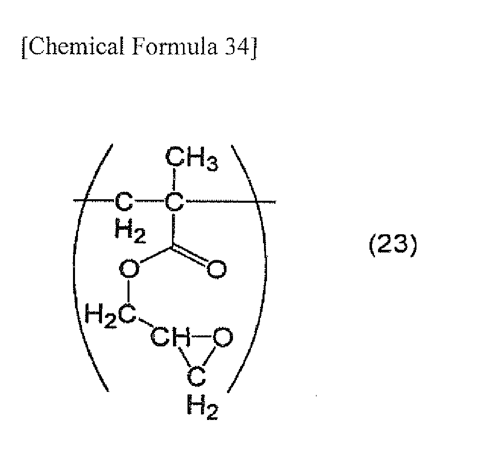 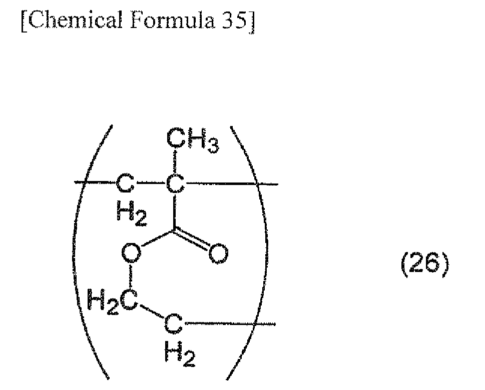 The results of ¹³C-NMR measurement of the obtained polymer are shown in FIG. 5. From an average value of integrated values of peaks ascribed to 194 ppm, 63 ppm and 13 ppm of N,N-diethyldithiocarbamylethyl methacrylate as chemical shifts and an average value of integrated values of peaks ascribed to 66 ppm and 50 ppm of glycidyl methacrylate as chemical shifts, it was determined that the ratio of the total amount of a repeating unit represented by Formula (23) having a linear structure : the total amount of a repeating unit represented by Formula (26) having a branched structure is 1.0 : 1.0.

Next, a solution in which 1 g of the hyperbranched polymer obtained in Example 5 was dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 120°C for 10 minutes to obtain a thin film having a film thickness of 178 nm. The surface of the thin film was observed by an AFM measurement. Such an appearance was observed that the obtained thin film was in a uniformity surface having a surface roughness of 0.29 nm. The thin film was dissolved in tetrahydrofuran and N-methyl-2-pyrrolidone which are good solvents for the obtained hyperbranched polymer.

Further, a solution in which 1 g of the obtained hyperbranched polymer and 0.5 g of alkylsulfonium salts (Adeka Opton CP-66, manufactured by Adeka Corporation) which is a mixture of crotyl tetramethylenesulfonium hexafluoro antimonate or the like were dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 120°C for 10 minutes to obtain a thin film having a film thickness of 256 nm. The surface of the thin film was observed by an AFM measurement. Such an appearance was observed that the obtained thin film was in a uniformity surface having a surface roughness of 0.28 nm. The thin film was not dissolved in tetrahydrofuran and N-methyl-2-pyrrolidone which are good solvents for the obtained hyperbranched polymer, so that it was apparently crosslinked.

### [Example 6]

### Synthesis of Acryl - Methacrylic Acid-based Hyperbranched Polymer Having Dithiocarbamate Group at Molecular Terminal Thereof

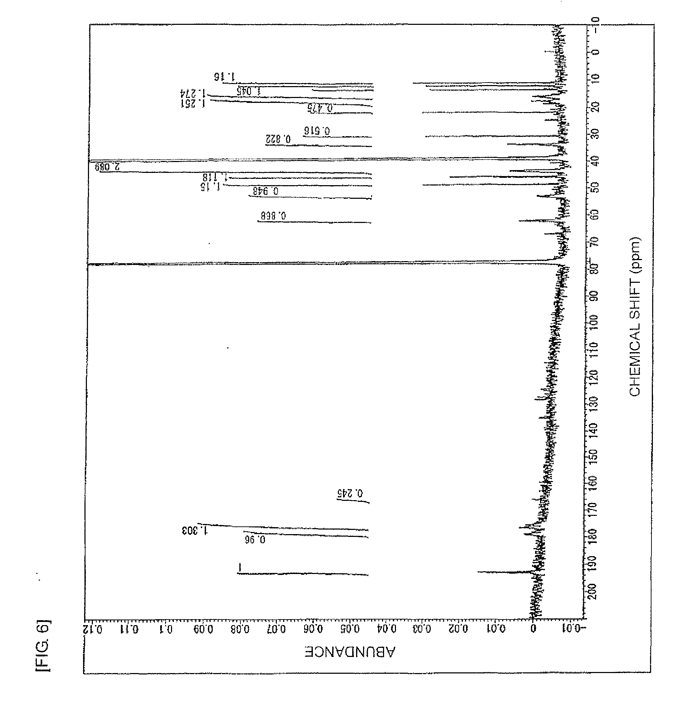

In a 300 mL glass-made reaction flask, 20 g of N,N-diethyldithiocarbamylethylmetacrylate, 6.6 g of methacrylic acid (manufactured by Tokyo Chemical Industry Co., Ltd.) and 150.3 g of tetrahydrofuran were charged and the resultant mixture was stirred to prepare a pale yellow transparent solution, followed by replacing the inside of the reaction system with nitrogen. From the center of this solution, a high pressure mercury lamp of 100 W (manufactured by Sen Lights Co., Ltd.; HL-100) was lighted to perform a photopolymerization reaction by an internal irradiation while stirring the reaction solution at a temperature of 30 ± 5°C for 6 hours. Next, this reaction solution was added to 2.5 L of hexane to reprecipitate a polymer in a slurry state. The slurry was filtered and the obtained polymer was redissolved in 100 g of tetrahydrofuran, followed by adding the resultant solution to 2.5 L of hexane to reprecipitate the polymer in a slurry state. The slurry was filtered and vacuum-dried to thereby obtaining 13.7 g of an objective in the form of a pale yellow powder. The weight average molecular weight Mw and the degree of dispersion Mw/Mn of the obtained polymer were measured by a gel permeation chromatography, in a converted molecular weight as polystyrene, and found to be 24,000 and 4.64, respectively.
The obtained hyperbranched polymer is a hyperbranched polymer having a structural formula represented by following Formula (25) as a polymerization initiation site, and having a repeating unit represented by Formula (24) having a linear structure and a repeating unit represented by Formula (26) having a branched structure. 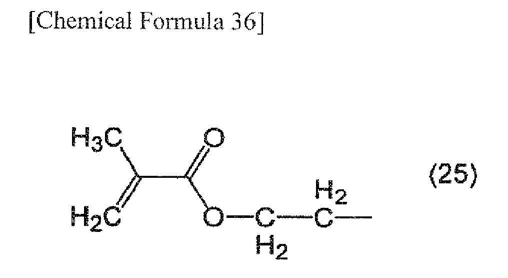 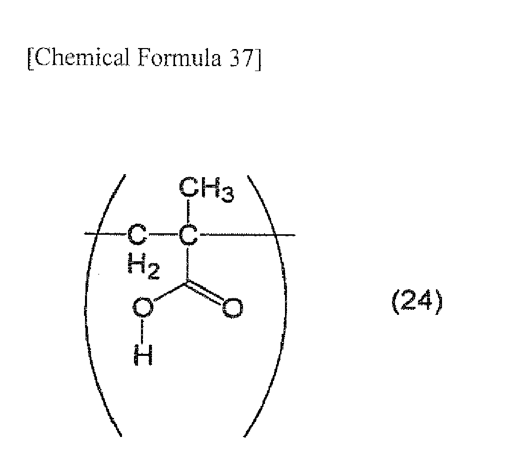 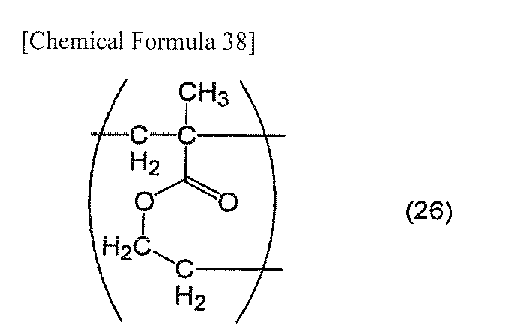 The results of ¹³C-NMR measurement of the obtained polymer are shown in FIG. 6. From an average value of integrated values of peaks ascribed to 193 ppm and 11 ppm of N,N-diethyldithiocarbamylethyl methacrylate as Chemical shifts and an average value of integrated values of peaks ascribed to 178 ppm of glycidyl methacrylate as chemical shifts, it was determined that the ratio of the total amount of a repeating unit represented by Formula (24) having a linear structure : the total amount of a repeating unit represented by Formula (26) having a branched structure is 1.0 : 1.1.

Next, a solution in which 1 g of the hyperbranched polymer obtained in Example 6 was dissolved in 9 g of cyclohexanone was prepared. This solution was filtered using a microfilter made of polytetrafluoroethylene having a pore diameter of 0.2 µm and was then coated on a glass substrate at 300 rpm for 5 seconds and further at 2,500 rpm for 20 seconds by a spin coating method. Thereafter, the coated substrate was heated on a hot plate at a temperature of 120°C for 10 minutes to obtain a thin film having a film thickness of 135 nm. The surface of the thin film was observed by an AFM measurement. Such an appearance was observed that the obtained thin film was in a uniformity surface having a surface roughness of 0.29 nm. The thin film was dissolved in tetrahydrofuran and N-methyl-2-pyrrolidone which are good solvents for the obtained hyperbranched polymer.

Further, a solution in which 1 g of the obtained hyperbranched polymer, 0.3 g of hexamethoxymethylolmelamine (Cymel 303, manufactured by MT AquaPolymer,Inc.) and 0.03 g of p-toluenesulfonic acid (manufactured by Tokyo Chemical Industry Co., Ltd.) were dissolved in 9 g of cyclohexanone was prepared. This solution was filtered using a microfilter made of polytetrafluoroethylene having a pore diameter of 0.2 µm and then was coated on a glass substrate at 300 rpm for 5 seconds and further at 2,500 rpm for 20 seconds by a spin coating method. Thereafter, the coated substrate was heated on a hot plate at a temperature of 120°C for 10 minutes to obtain a thin film having a film thickness of 155 nm. The surface of the thin film was observed by an AFM measurement. Such an appearance was observed that the obtained thin film was in a uniformity surface having a surface roughness of 0.28 nm. The thin film was not dissolved in tetrahydrofuran and N-methyl-2-pyrrolidone which are good solvents for the obtained hyperbranched polymer, so that it was apparently crosslinked.

### INDUSTRIAL APPLICABILITY

Since the hyperbranched polymer of the present invention has functional groups such as a hydroxyl group, an epoxy group or a carboxyl group in a molecular chain of a repeating unit, the characteristics of the polymer such as the degree of crosslinking can be controlled by the mixing ratio of a crosslinker or the like, and the polymer is excellent in the degree of freedom of the reactivity. Accordingly, the polymer can be used in multiphase applications such as paint materials, adhesive materials, resin fillers, various molding materials, nanometer pore forming agents, resist materials, electronic materials, printing materials, battery materials and medical materials.

### BRIEF DESCRIPTION OF THE DRAWINGS

[FIG. 1] FIG. 1 is a ¹³C-NMR spectrum of a hyperbranched polymer obtained in Example 1.
[FIG. 2] FIG. 2 is a ¹³C-NMR spectrum of a hyperbranched polymer obtained in Example 2.
[FIG. 3] FIG. 3 is a ¹³C-NMR spectrum of a hyperbranched polymer obtained in Example 3.
[FIG. 4] FIG. 4 is a ¹³C-NMR spectrum of a hyperbranched polymer obtained in Example 4.
[FIG. 5] FIG. 5 is a ¹³C-NMR spectrum of a hyperbranched polymer obtained in Example 5.
[FIG. 6] FIG. 6 is a ¹³C-NMR spectrum of a hyperbranched polymer obtained in Example 6.

## Claims

1. A hyperbranched polymer having a structural formula represented by following Formula (1) as a polymerization initiation site, and having a repeating unit represented by following Formula (2) having a linear structure and a repeating unit represented by following Formula (3) having a branched structure, wherein the total number of the repeating units represented by Formula (2) having a linear structure is an integer of 1 to 100,000 and the total number of the repeating units represented by Formula (3) having a branched structure is an integer of 2 to 100,000 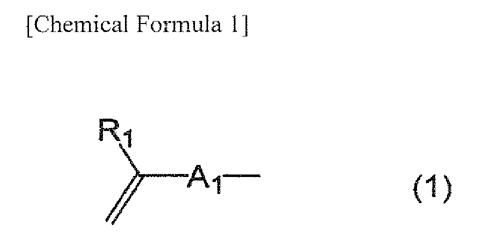 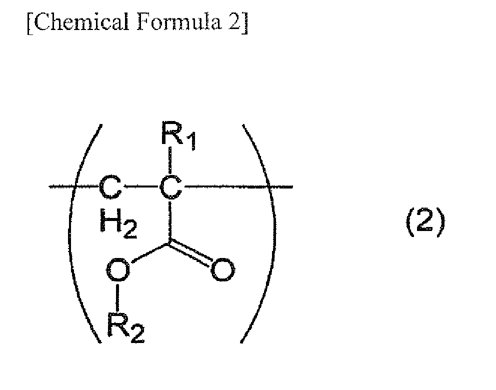 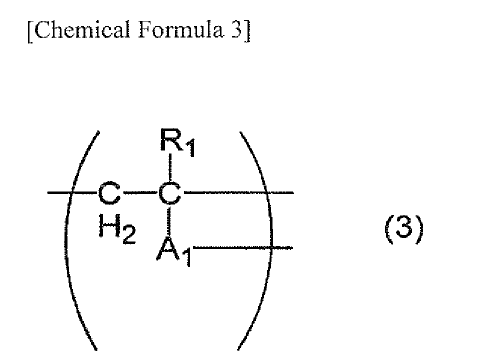 (in Formulae (1) to (3), R₁ represents a hydrogen atom or a methyl group; R₂ represents a hydrogen atom, a linear or branched hydroxyalkyl group having 1 to 20 carbon atoms, or a linear or branched alkyl group containing an epoxy group and having 3 to 20 carbon atoms; and A₁ represents a structure represented by following Formula (4) or Formula (5)), 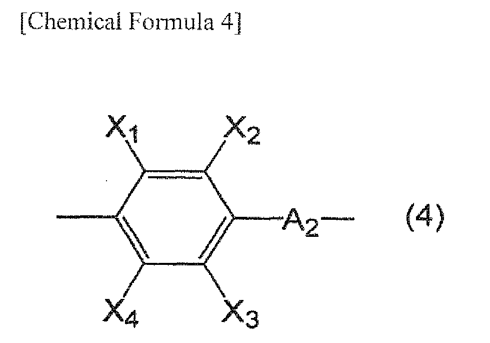 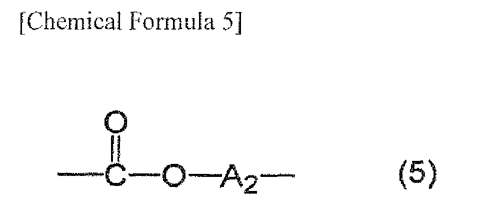 (in Formulae (4) and (5), A₂ represents a linear, branched or cyclic alkylene group having I to 20 carbon atoms which may contain an ether bond or an ester bond; and each of X₁, X₂, X₃ and X₄ represents a hydrogen atom, an alkyl group having I to 20 carbon atoms or an alkoxy group having 1 to 20 carbon atoms).

2. The hyperbranched polymer according to claim 1, having a dithiocarbamate group at a molecular terminal thereof.

3. The hyperbranched polymer according to claim 1, wherein with respect to the ratio between the total number of repeating units represented by Formula (2) having a linear structure and the total number of repeating units represented by Formula (3) having a branched structure which are contained in the polymer, the amount of repeating units represented by Formula (2) having a linear structure is 1 mol% to 90 mol% and the amount of repeating units represented by Formula (3) having a branched structure is 99 mol% to 10 mol%, based on the total amount of the repeating units represented by Formula (2) and the repeating units represented by Formula (3).

4. The hyperbranched polymer according to claim 1, wherein the A₁ is a structure represented by Formula (6):

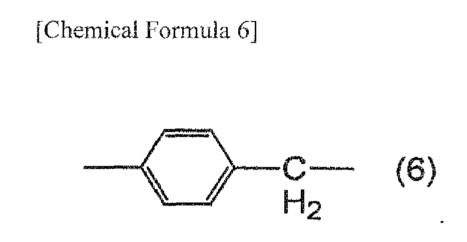

5. The hyperbranched polymer according to claim 1, wherein the A₁ is a structure represented by Formula (7): 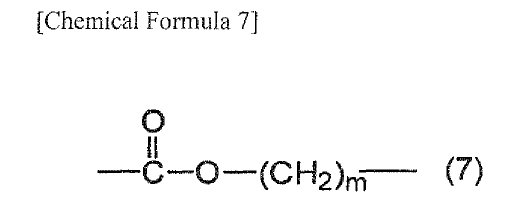 (where m represents an integer of 2 to 10).

6. The hyperbranched polymer according to claim 1, wherein a weight average molecular weight is 500 to 5,000,000, as measured by a gel permeation chromatography in a converted molecular weight as polystyrene.

7. A method for producing the hyperbranched polymer according to claim 1 comprising:
holding a dithiocarbamate compound represented by Formula (8): 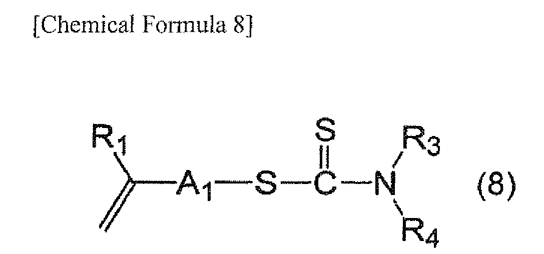 (where R₁ and A₁ represent the same as defined in Formulae (1) to (3); each of R₃ and R₄ represents an alkyl group having 1 to 5 carbon atoms, a hydroxyalkyl group having 1 to 5 carbon atoms or an arylalkyl group having 7 to 12 carbon atoms; and R₃ and R₄ may be bonded to each other to form a ring together with a nitrogen atom bonded to R₃ and R₄),
and a (meth)acrylate compound represented by Formula (9): 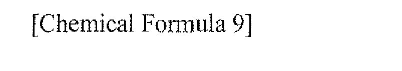 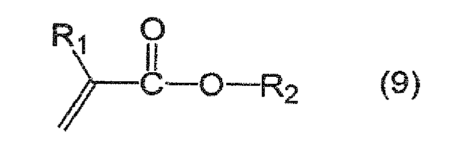 (where R₁ and R₂ represent the same as defined in Formulae (1) to (3)), together; and
subjecting them to a living-radical polymerization.

8. The method for producing the hyperbranched polymer, according to claim 7 comprising:
dissolving the dithiocarbamate compound represented by Formula (8) and the (meth)acrylate compound represented by Formula (9) in a solvent; and
subjecting them to a living-radical polymerization by irradiating ultraviolet rays.

9. The method for producing the hyperbranched polymer, according to claim 7 or claim 8, wherein the dithiocarbamate compound represented by Formula (8) is N,N-diethyldithiocarbamylmethylstyrene or N,N-diethyldithiocarbamylethyl methacrylate.

10. The method for producing the hyperbranched polymer, according to claim 7 or claim 8, wherein the (meth)acrylate compound represented by Formula (9) is 2-hydroxyethyl methacrylate, glycidyl methacrylate or methacrylic acid.

11. The method for producing the hyperbranched polymer, according to claim 7 or claim 8, wherein the dithiocarbamate compound represented by Formula (8) is N,N-diethyldithiocarbamylmethylstyrene or N,N-diethyldithiocarbamylethyl methacrylate and the (meth)acrylate compound represented by Formula (9) is 2-hydroxyethyl methacrylate, glycidyl methacrylate or methacrylic acid.
